(19) Europäisches Patentamt
European Patent Office
Office européen des brevets

(11) EP 4 492 163 A1

(12) EUROPEAN PATENT APPLICATION

(43) Date of publication:
15.01.2025 Bulletin 2025/03

(21) Application number: 23275102.4

(22) Date of filing: 10.07.2023

(51) International Patent Classification (IPC):
G05B 13/02 (2006.01)    G06N 3/045 (2023.01)

(52) Cooperative Patent Classification (CPC):
G05B 13/027; G06N 3/045

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: BAE SYSTEMS plc
London SW1Y 5AD (GB)

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **CONTROLLING A SYSTEM USING AN ARTIFICIAL NEURAL NETWORK**

(57) A computer-implemented method of controlling a system using an artificial neural network comprises obtaining (1002) data defining a plurality of trained artificial neural networks models. Each of the plurality of models is trained to output a system control signal based on at least one input signal. The method obtains (1008) at least one system metric relating to operation of the system, and selects (1010) one of the plurality of models using the at least one system metric. The selected model is used (1006) as a controller for the system.

OBTAIN TRAINED NNs AND DATA ASSIGNING EACH NN TO A SUB-RANGE
1002

SELECT INITIAL NN TO CONTROL SYSTEM
1004

USE THE SELECTED NN TO CONTROL THE SYSTEM
1006

OBTAIN SYSTEM METRIC(S)
1008

HAS THE SYSTEM METRIC(S) CHANGED TO OUTSIDE SUB-RANGE OF SELECTED NN?
1010

N

Y

SELECT NN HAVING THE ASSINGED SUB-RANGE THAT INCLUDES THE SYSTEM METRIC(S)
1012

FIG. 10

## Description

FIELD OF THE INVENTION

The present invention relates to controlling a system using an artificial neural network.

BACKGROUND

Control systems are used for many varied purposes. Examples include controlling unwanted noise and/or vibration in engineering systems or in public and private spaces. Passive control solutions are capable of effectively eliminating high frequency components of noise and vibration but are typically large or heavy, possibly exceeding the design constraints of a given application. Active control solutions, by contrast, are capable of good control at low frequencies, and are typically lightweight and small in size. Historically, feedforward active noise and vibration control systems have been implemented using linear control filters and linear plant models, commonly using the well-known FxLMS algorithm.

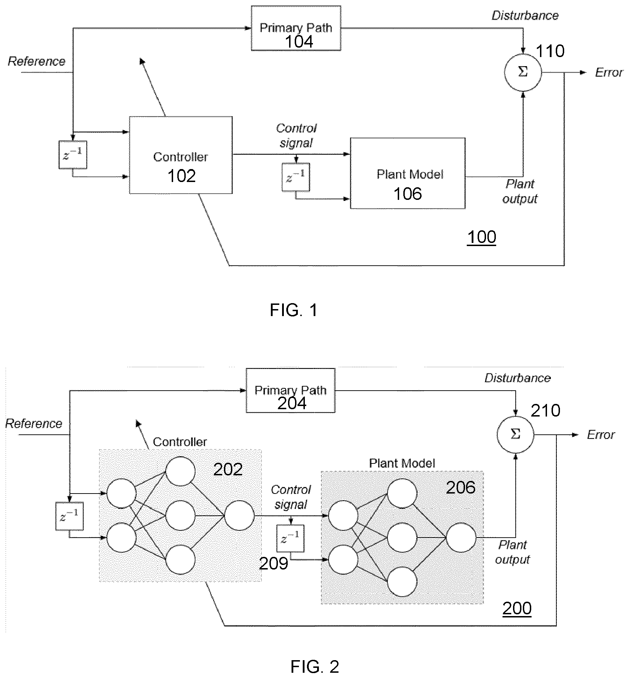

Figure 1 is a schematic diagram of a typical known linear feedforward control system 100. The system includes a controller 102 that receives input comprising a system reference signal x[n] and generates an output **u**[n] in the form of a control signal, e.g. **u**[n] = **h**[n] ∗ **x**[n]. **h**[$n$] and **x**[$n$] which are convolved to produce the (scalar) control signal u[$n$] at time/sample $n$ represent the Finite Impulse Response (FIR) control filter and tapped delay line of the reference signal x[n], respectively. The control signal is typically computed to cancel out the effect of a disturbance signal generated via the primary path 104 of the system by producing a control action based on a measurement of the disturbance.

The control signal **u**[n] is received by a plant model 106 that is configured to simulate the system and generate the expected output that the real system would output in response to a given input. The plant model outputs a plant signal y[n] based on the inputted control signal, e.g. $y[n] = \hat{\mathbf{g}} ∗ \mathbf{u}[n]$. The plant model output $y[n]$ is linearly summed with the disturbance signal $d[n]$ by a summing component 110 to generate an error signal $e[n]$. In general the aim is for the plant model output $y[n]$ to match the disturbance signal $d[n]$ so that the system error is minimised in order to reduce noise/vibration in the system, for example.

If the plant is assumed to be Linear Time Invariant (LTI) then it can be well modelled by Finite Impulse Response (FIR) $\hat{\mathbf{g}}$. For a linear (e.g. FIR) controller, it is possible to 'switch' the controller and plant model, allowing for the FxLMS algorithm. However, nonlinearities present in either the plant or primary path of the control system can have a significant impact on control performance. If the plant is nonlinear then a nonlinear plant model will result in better modelling of the plant output. Further, if the primary path is nonlinear then a nonlinear controller will result in better control of the disturbance.

A further known approach which has been applied to active control over the past few decades is the use of machine learning. Artificial Neural Networks (NNs) in particular possess the property of being 'universal approximators' and have been used in the modelling and control of unknown or uncertain nonlinear systems.

Figure 2 is a schematic diagram of a known feedforward control system 200 that uses NNs. The system comprises a first NN 202 that has been trained to function as a controller that outputs control signals. The first NN will have been trained using a dataset comprising system input signals, typically comprising the reference signal $x[n]$, and error signals generated in response to those inputs signals. Similarly to the case of the linear controller of Figure 1, the first NN 202 receives as input a tapped delay line of $x[n]$ and outputs a control signal $u[n]$. During training, a tapped delay line comprising the control signal **u**[n] is input into a second NN 206 that has been trained to function as a system plant model. As in the arrangement of Figure 1, the plant model output $y[n]$ is linearly summed by a component 210 with the disturbance signal $d[n]$ of the primary path 204 in order to generate an error signal $e[n]$. The error signal is then used to update the weights and biases of the first NN.

The properties of the input, and therefore the effect of the system nonlinearity, may change in time. In view of this in patent application no. GB2302901.0 titled "Controlling a system using an artificial neural network and artificial neural network training" lodged on 28 February 2023 in the name of BAE Systems plc the present inventors disclosed a method of training an artificial neural network, NN, useable as a controller for a system. The method comprises obtaining input data representing a tapped delay line comprising a plurality of reference signals of the system; inputting the plurality of reference signals to a respective plurality of NNs that output a respective plurality of control signals, the plurality of NNs comprising a first NN and at least one further NN, wherein weights and biases of the at least one further NN correspond to weights and biases of a current iteration of the first NN; providing data representing a tapped delay line comprising the plurality of control signals as input to a model configured to simulate the system and to output a model signal; generating a system error signal using the model signal, and training a next iteration of the plurality of NNs using training data comprising the obtained input data and the system error signal. A number of the plurality of NNs can correspond to a number of the plurality of reference signals in the obtained input data required for the plant model (and the length of the tapped delay line represented by the obtained input data). The current iteration of the NN may be generated using training data comprising previously-obtained input data comprising a plurality of reference signals obtained immediately prior to the obtained input data and corresponding system error signal generated using the previously-obtained input data.

The range over which effective control can be achieved using this method is influenced by the size of the network, with larger networks achieving better generalized performance. However, the additional computational cost of inferring the outputs of larger NNs in real time may not be desirable - or realizable - in practice.

SUMMARY

Embodiments of the present invention can address one or more of the above technical problems. Embodiments can aim to improve or maximise control performance over a range of nonlinear behaviour. Embodiments can train multiple small neural networks which individually achieve good performance over a specific range of nonlinear behaviour. Based on one or more measurable metric of the system, which can be related to the behaviour of the $x[n]$ nonlinear system, the control system may effectively switch between the NNs with a view to achieving near-optimal performance at low real-time computational cost. Embodiments may infer the output of only one trained NN controller at a time, depending on which trained NN will produce the best control performance at a given time.

According to a first aspect of the present invention there is provided a computer-implemented method of controlling a system using an artificial neural network, the method comprising:

obtaining data defining a plurality of trained artificial neural networks models, each of the plurality of models trained to output a system control signal based on at least one input signal;

obtaining at least one system metric relating to operation of the system;

selecting one of the plurality of models using the at least one system metric, and

using the selected model as a controller for the system.

The selected model may be used as a controller for the system by outputting the system control signal based on at least one input signal.

The/each system metric can have a value within a (known/expected) range of values. Each of the plurality of models may be assigned to one of a plurality of sub-ranges of the range of values (for each said system metric). The step of selecting one of the plurality of models may comprise selecting one of the plurality of models assigned to the one of the plurality of sub-ranges that includes a (current) value of the obtained system metric. The method may comprise obtaining data, such as a table, comprising an assignment of each possible value(s) of the at least one metric to one of the plurality of models.

The at least one system metric may indicate effects of nonlinearity on a primary path of the system during the operation of the system. The inputs and outputs of the models may be non-linear and/or inputs and outputs of the system may be non-linear. The at least one system metric may comprise a measurement based on a signal produced by a sensor and may directly correspond to that measurement. Alternatively, the at least one system metric may comprise an estimate that is based on a calculation involving a value provided by a sensor or the like, or an input or output of the system. For example, the system metric may comprise a root mean square of a reference input signal of the system.

According to another aspect of the present invention there is provided a system controller comprising a processor and memory, wherein the processor is configured to execute a method substantially as described herein.

According to yet another aspect of the invention there is provided a system including a system controller configured substantially as described herein.

According to another aspect of the present invention there is provided a method of generating data adapted for using an artificial neural network in control of a system, the method comprising:

obtaining data defining a plurality of trained artificial neural networks models, each of the plurality of models trained to output a system control signal based on at least one input signal;

using each of the plurality of models to control the system;

determining which of the plurality of trained models results in a best control performance of the system for each of a plurality of sub-ranges of an overall range of at least one system metric;

assigning each of the plurality of trained models to a respective one of the plurality of sub-ranges based on the determining, and

generating data representing the assigning.

The method may comprise recording an output of the model for individual values of the at least one system metric. The method may comprise testing if control performance of one of the plurality of trained models is better than control performance of others of the plurality of trained models for a subset of the individual values. If so then that subset can be set as the sub-range to be assigned to the one of the plurality of trained models.

According to another aspect of the present invention there is provided a method of training a plurality of artificial neural network models substantially as described herein.

The method may comprise training each of a plurality of models over a range of at least one system metric substantially as described herein. Training data may comprise at least one system input signal and an output produced by controlling the system using the model.

The method may further comprise storing data representing a trained NN including the weights and biases of the first NN updated according to the current iteration of the NN.

The method may further comprise applying a backpropagation technique to update weights and biases of the NN to minimise a cost function during the training.

The NN may comprise a Multilayer Perceptron (MLP) with a single hidden layer or any other NN architecture that can be generalised over a range of behaviours.

The controller may comprise an active and/or feedforward controller for the system. The controller may be configured to control acoustic noise/vibration in the system.

According to another of the present invention there is provided apparatus for training an artificial neural network (e.g. a NN useable as a system controller), the system comprising a processor and memory, the memory comprising computer executable instructions for performing a method substantially as described herein.

According to another aspect of the invention there is provided an artificial neural network trained according to a method substantially as described herein.

According to another aspect of the present invention there is provided a system controller comprising an artificial neural network trained according to a method substantially as described herein.

According to another aspect of the invention there is provided a system including a system controller comprising an artificial neural network trained according to a method substantially as described herein.

According to a further aspect of the present invention there is provided a computer readable medium, or circuit, storing a computer program to operate any method substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

BRIEF DESCRIPTION OF THE DRAWINGS

Embodiments of the invention will now be described by way of example only and with reference to the accompanying drawings:

Figure 1 is a schematic diagram of a control system based on a conventional linear feedforward design;

Figure 2 is a schematic diagram of a control system based on a conventional dual-NN design;

Figure 3 is a schematic diagram of an architecture used to train NNs;

Figure 4 is a flowchart illustrating example steps executed to train the NN using the architecture of Figure 3;

Figure 5 is a schematic diagram of an arrangement where a controller is used in combination with a pair of simulated loudspeakers;

Figure 6 illustrates examples of the control performance of four NNs trained over a range of a system metric and tested at a series of single levels of the system metric;

Figure 7 illustrates an example of system metric estimation and NN selection over time;

Figure 8A plots the performance of the four trained NNs over time as the system metric changes with the profile plotted in Figure 7;

Figure 8B is a graph illustrating another example where NNs are selectable based on two system metrics;

Figure 9 is a flowchart illustrating steps involved in preparing data relating to a set of NNs for use in a system controller according to an embodiment, and

Figure 10 is a flowchart illustrating steps involved when using the trained NNs to control the system according to an embodiment.

DETAILED DESCRIPTION

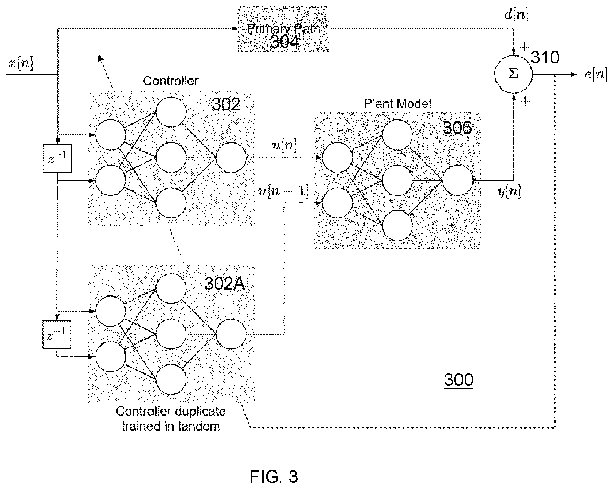

A diagram of an architecture 300 used for training an NN for system controller is shown in Figure 3. The architecture of a system typically refers to its structure in terms of system components and their interrelationships. Typically the architecture will be implemented using one or more processor configured to execute software modules. The input to the system comprises a tapped delay line that includes a plurality of reference signals. In practice, the length of the tapped delay line will be based on various factors including the impulse response, sample rate, etc, of a particular system.

The example architecture 300 comprises a first NN 302 configured to output data useable as a control signal based on the input. The example architecture also comprises a further NN 306 configured to function as a plant model that simulates the real system and can generate the expected output that the real system would output in response to a given input. In terms of architecture, the plant model NN can be anything that is capable of mapping the tapped delay line of control signals $u[n]$ to the plant model output $y[n]$. If the mapping between $u[n]$ and $y[n]$ is nonlinear then any typical NN architecture (e.g. MLP, RNN, LSTM etc) can be used to model this mapping. The choice of activation function will likely affect the maximal performance of a given architecture and its computational efficiency. The training of the NN model can be achieved via supervised learning using standard backpropagation methods, and defining a 'plant modelling error' which would be the difference between the *prediction* $\hat{y}[n]$ of the plant model given an input $u[n]$, and the true measured output of the system, $y[n]$.

The controller NN 302 receives as input the tapped delay line of $x[n]$ and outputs a control signal $u[n]$, which is received by the plant model NN 306. The plant model NN output $y[n]$ is linearly summed by a summation component 310 with the disturbance signal $d[n]$ of the primary path 304 to generate a system error signal $e[n]$.

In more detail, given a tapped delay line of length $L$ of the reference signal $x[n]$, given by

$$\mathbf{x}[n] = \begin{pmatrix} x[n] \\ x[n-1] \\ ... \\ x[n-L+1] \end{pmatrix}$$

the control signal $u[n]$ can be generated by inputting $\mathbf{x}[n]$ to the controller NN 302. In cases where the NN architecture is that of a Multilayer Perceptron (MLP) with a single hidden layer, then the output of the NN is given by

$$u[n] = \sum_i w_i^{c,o} h_i^c + b^{c,o}$$

where $w_i^{c,o}$ are the output weights of the NN, $b^{c,o}$ is the NN output bias, and $h_i^c$ are the NN hidden layer node values, given by

$$h_i^c = \sigma^c \left( \left[ \mathrm{W}\mathbf{x}[n] \right]_i + b_i^{c,h} \right)$$

where W is a matrix of weights between the input layer and hidden layer, $[\mathrm{W}\mathbf{x}[n]]_i$ is the $i$th element of the vector $\mathrm{W}x[n]$, $\sigma^c(\cdot)$ is the nonlinear activation function applied to the controller hidden layer, and $b_i^{c,h}$ is the bias of the $i$th hidden layer node.

In total,

$$u[n] = \sum_i w_i^{c,o} \sigma^c \left( \left[ \mathbf{W}\mathbf{x}[n] \right]_i + b_i^{c,h} \right) + b^{c,o}$$

However, a full tapped delay line $\mathbf{u}[n]$ is required to input to the plant model NN 306 to generate the plant model output $y[n]$ and therefore the error $e[n]$. It is therefore necessary to have available previous control signal values $u[n$ - 1], $u[n$ - 2], ..., $u[n$ - $I$ + 1] for a tapped delay line of length $I$.

A known solution (see Z.-c. Qiu and W.-z. Zhang, "Trajectory planning and diagonal recurrent neural network vibration control of a flexible manipulator using structural light sensor," vol. 132, pp. 563-594) to this problem is to store the values of the control signal in memory, and simply call upon them when evaluating the output of the plant model and updating the controller weights and biases using a backpropagation method. However, this is an unusual task and standard machine learning libraries are not typically set up to handle it.

To explain how this known memory-based solution would operate in the dual-NN system controller of Figure 2, the memory would be provided to store the output of controller NN 202 and make it available as input for the plant model NN 206 (effectively taking the place of the unit delay component 209 in Figure 2). Therefore, the output u[n] from the controller NN 202 based on the reference signal x[n] would be generated based on the current iteration of the controller NN; however, the output $\mathbf{u}$[n-1] retrieved from the memory would have been generated by the previous iteration of the controller NN.

Thus, the result of this known memory-based method is that the error signal e[n] does not accurately reflect the control performance of the current iteration of the controller; rather, it is calculated from a combination of the output u[n] generated by the current iteration of the controller NN and the outputs u[n-k] of the previous $L$ - 1 iterations of the controller NN. This may lead to stability and performance issues in the training of the controller NN. An iteration can comprise the number of batches of training data that is needed to complete one training epoch/learning cycle.

The architecture shown in Figure 3 can overcome this problem by generating the previous controller outputs u[n - k] as if the current iteration of the controller NN 302 has always been in place. This can be achieved using one or more copies 302A of the first controller NN 302 so that the total number of controller NNs corresponds to the number of reference signals input/the length of the tapped delay line input. Typically, at least one processor will execute the copies of the NNs.

As shown in Figure 3, the output of the first controller NN 302, for example, is $u[n]$, is the first input to the plant model NN 306. Unit delays ($z^{-1}$) indicate the tapped delay line used. This is a vector $u[n]$ as defined above. The tapped delay line is used (as opposed to, for example, the current value of the reference $x[n]$) because the past inputs to the system continue to affect its output in the present and so this information is needed to model the current output of the system.

In the example of Figure 3, the length of the tapped delay line is 2 (i.e. it comprises 2 reference signals) and so there is one additional controller NN 302A, resulting in a total number of 2 controller NNs in the architecture. This is purely illustrative and the skilled person will understand that the numbers can vary. For example, if the tapped delay line included 1000 reference signals then there would be a corresponding total of 1000 controller NNs (one "original" controller NN 302 and 999 "copied" controller NNs 302A). The weights and biases of the/each 'copied NN 302A are exactly the same as those of the first controller NN 302. All the controller NNs 302, 302A are also updated/trained in the same way simultaneously using the same training data comprising the input data x[n] and the corresponding error e[n] that is generated using it.

Using the same notation as above, in general,

$$u[n - k] = \sum_i w_i^{c,o} \sigma^c \left( \left[ \mathbf{W}\mathbf{x}[n - k] \right]_i + b_i^{c,h} \right) + b^{c,o}$$

where all the weights and biases in the above equation are those of the *current* iteration of the controller during training. The values of $u[n$ - $k]$ are generated from the current iteration of the controller and standard backpropagation techniques can then be used to update the weights and biases of the controller to minimise a given cost function of $e[n]$.

In specific examples a Rectified Linear Unit (ReLU) activation is used for the controller NNs 302, 302A. In general, any activation function can be used, although there are likely to be significant differences in performance for a given size of network. The adjustment of the weights and biases of the networks can be achieved via backpropagation of the error through the network. In specific examples this is achieved using the Adam optimizer. Backpropagation techniques are generally fundamentally gradient descent algorithms to minimize the cost function. In general, the cost function will be determined by the application/system. For example, when aiming to achieve broadband attenuation of the acoustic disturbance at the error sensor the cost function is the mean square value of the error. As this example is an acoustics application, and humans essentially perceive sound intensity (rather than the true pressure of a sound), this is an appropriate cost function. In general, the cost function can be any function of $e[n]$ which can be evaluated and minimized.

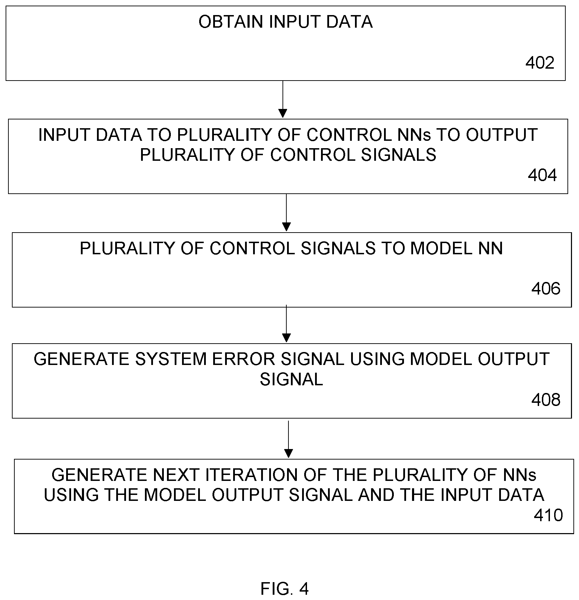

Figure 4 is a flowchart illustrating steps performed by an example method of training a NN that will be useable as a system controller using the training architecture shown in Figure 3. The steps of any of the flowcharts herein can be performed by software instructions being executed on one or more processor. It will be appreciated that at least one of the steps of any of the flowcharts herein may be re-ordered or omitted. One or more additional steps may be performed in some cases. Further, although the steps are shown as being performed in sequence in the Figures, in alternative cases some of them may be performed concurrently, possibly on different processors or cores. It will also be understood that versions can be implemented using any suitable software application, programming language, data editors, etc, and may be represented/stored/processed using any suitable data structures and formats.

Specific examples can use the Tensorflow and Keras libraries for Python™ for the training of the NNs, as well as generating their outputs for a given input. In practice, the structure of these NNs comprises a series of nested operations of matrix multiplication, nonlinear activation or linear functions and addition. Similarly, the training algorithms use nested functions to calculate the gradient of the cost function with respect to a given weight or bias of the network. As such, any suitable software can be used for these tasks.

At step 402, input data representing a tapped delay line comprising a plurality of reference signals x[n] of the system to be controlled is obtained. The data may be obtained from storage. Alternatively, the data may be obtained (possibly in real-time) during actual use or simulation of the system. In some cases the data may be obtained from a remote device, such as a sensor connected to the system.

At step 404, the plurality of reference signals x[n] are input to a respective plurality of NNs 302, 302A. As discussed above, the plurality of NNs comprise a first NN 302 and one or more copies 302A of the first NN. Each of the copies 302A are configured such that all their weights and biases are exactly the same as weights and biases of the current iteration of the first NN 302 during training. Thus, all the NNs are substantially identical. The plurality of NNs 302, 302A output a respective plurality of control signals that can represent at least one a tapped delay line $\mathbf{u}[n]$.

At step 406, the tapped delay line $\mathbf{u}[n]$ comprising the plurality of control signals is received by a model configured to simulate the system. The model can comprise a further NN 306 trained as a plant model for the system and which outputs a model signal y[n].

At step 408, a system error signal e[n] is generated using the model signal y[n]. In specific examples this can be done by linearly summing a disturbance signal d[n] of the system and the model signal y[n].

At step 410 the next iteration of the plurality of NNs is generated by training the plurality of NNs using training data comprising the data that was input at step 402 and the error signal generated at step 408. Thus, all the NNs are substantially identical with the weights and the biases of all the NNs in the plurality of NNs matching exactly (i.e. the weights and the biases of the next iteration of the at least one further NN 302A correspond to the weights and the biases of the next iteration of the first NN 302 as updated).

Control may then return to step 402 to continue the training, or the method may end when the training is complete, e.g. when no more input data is provided or in response to user instruction.

Data representing one of the trained NNs 302, 302A, including all its weights and biases, can be extracted from the full dual-net architecture and stored or transferred to another device for further use/processing, e.g. by a real-time system control application. As the generation of the output of the NN comprises a series of nested operations this can be undertaken on a variety of different types of processors. It will also be understood that the NN data can be in any suitable format that is compatible with any software application or processor that will use it. The NN data can be used to execute the trained NN in prediction mode so that it functions as a controller for the system (or the same type of system) from which the training data originated. The control system can have advantages including being relatively easy to set up in standard Machine Learning libraries, and the tapped delay line for the plant model is always generated from the most 'up to date' version/iteration of the controller NN and so can improve training stability and performance.

The NN training approach described above is more computationally intensive than known methods that simply store $\mathbf{u}[n]$ in memory and retrieves it. However, the above approach can reduce or eliminate the stability and performance issues that arise when using the known memory-based approach. Further, computing $\mathbf{u}[n]$ is only required during the training of the controller NN, as is the availability of the previous control signal values. When the trained controller NN is used as the actual system controller during operation/prediction phase it is fixed and so, for the same sized controller, the computational cost to produce $u[n]$ from $\mathbf{x}[n]$ is independent of the training method. It will be understood that only one controller NN at a time is required in use, and none of the copies that are utilized during the training phase. In some cases a controller NN 302 that has been trained using the architecture illustrated in Figure 3 can be used in the place of the controller NN 202 in the control system shown in Figure 2. During inference components such as the plant model 206/306 and the summation component 210/310 are not present/used and the control signal generated by the controller NN can be directly used for system control.

It will be understood that the above can be designed to train a NN useable as a controller for any suitable system. Specific applications will be disclosed below, but it will be understood that these are exemplary only.

In a first example the system comprises an acoustic noise control system where a primary noise source generates a disturbance and a secondary loudspeaker creates a cancelling signal. In this example the input reference signal x[n] comprises a signal related to the primary noise source and the disturbance d[n] comprises the signal generated by the primary noise source at the error sensor. The control signal **u**[n] output by the controller NNs represents a signal that would be input to the secondary loudspeaker to generate the cancelling signal. The plant model NN outputs a signal y[n] that simulates the output of the physical plant. The error signal represents the difference between the disturbance d[n] and the signal y[n] output by the plant model NN. The training data for the plant model NN can typically be generated by inputting a random control signal u[n] to the control actuator/loudspeaker. The resultant signal y[n] at the error microphone/accelerometer is also measured and recorded. The plant model NN can then be trained to map a tapped delay line **u**[n] of the random control signal to the signal y[n] measured at the error microphone. A limitation is the assumption that the primary path and the plant are not coupled.

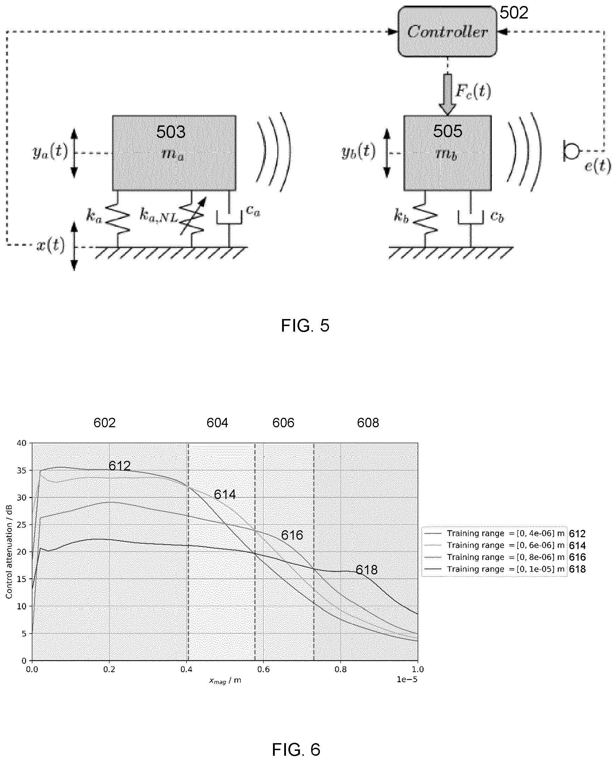

Figure 5 is a schematic diagram of an arrangement where a controller is used in combination with a pair of simulated loudspeakers where the secondary loudspeaker creates a cancelling signal. A primary loudspeaker 503, which generates acoustic disturbance, can be modelled as a damped Duffing oscillator and is excited by the motion $x(t)$ of a floor to which it is attached and is assumed to behave as a monopole acoustic source. The displacement of the Duffing oscillator, $y_a(t)$, is caused by the motion of the floor. The displacement x(t) of this floor is also taken to be the reference signal passed to a feedforward controller 502. The displacement $y_b(t)$ of the mass mb is caused by the control force F(t) produced by the controller 502. A tapped delay line of digital samples of $x(t)$ is passed to the controller 502, which generates a control force applied to a separate linear oscillator in the form of a secondary loudspeaker 505. This oscillator is also assumed to behave as a monopole acoustic source, and its function is to generate an acoustic signal which cancels that produced by the first oscillator at the error sensor, thereby minimizing $e(t)$. In the results below, $x(t)$ is a band-limited Gaussian random signal with root mean square (RMS) value $x_{mag}$ and energy in the frequency range 0 - 300 Hz.

As discussed above, the NNs useable in a system controller can be trained to have some degree of generalized performance over a range of $x_{mag}$. The range over which effective control performance can be achieved is influenced by the size of the network, with larger networks achieving better generalized performance. However, the additional computational cost of inferring the outputs of larger NNs in real time may not be desirable - or realizable - in practice. This led the present inventors to a novel 'switching' approach, where a set of smaller NN controllers are made available which have good generalized performance over specific sub-ranges of $x_{mag}$, and the output of only one NN-based controller is inferred at a time, depending on which controller is determined to produce the best control performance at a given time.

To illustrate the NN switching approach, Figure 6 presents the control performance of four individual NN controllers trained over a range of $x_{mag}$, and tested at a series of single/individual levels of $x_{mag}$. The control performance represents how effective an individual NN was at controlling the system, e.g. in terms of producing a desired result, such as effectively controlling unwanted noise and/or vibration (attenuation in dB in the example). The relationship between the control performance and individual values of the system metric may be analysed. Depending on the range of $x_{mag}$ over which the NNs were trained, their performance can exceed that of the other NNs in specific ranges of $x_{mag}$. The four regions/sub-ranges 602 - 608 of the plot indicate the range of $x_{mag}$ over which four performance curves 612 - 618 (each of which corresponds to one of the four NNs) is maximal amongst the set of NNs. In the example the NNs used to produce these results were not carefully trained to maximise performance, but are used to illustrate the NN switching approach.

In real systems which could be considered similar to that of Figure 5, the level of $x_{mag}$ changes over time as the stimulation of the system changes. As a result, the use of a single controller NN could result in sub-optimal performance over time. To overcome this limitation, embodiments can estimate $x_{mag}$ over time, and switch between a set of (e.g. four) NNs for system control based on the estimate. In the example, every 0.1 s, the RMS of $x(t)$ is estimated from the previous 0.2 s of the signal $x(t)$. Depending on which of the four sub-ranges/regions 602 - 608 of $x_{mag}$ (as plotted in Figure 6) this estimate lies, one of the four NNs represented by the curves 612 - 618 is selected to produce the control force.

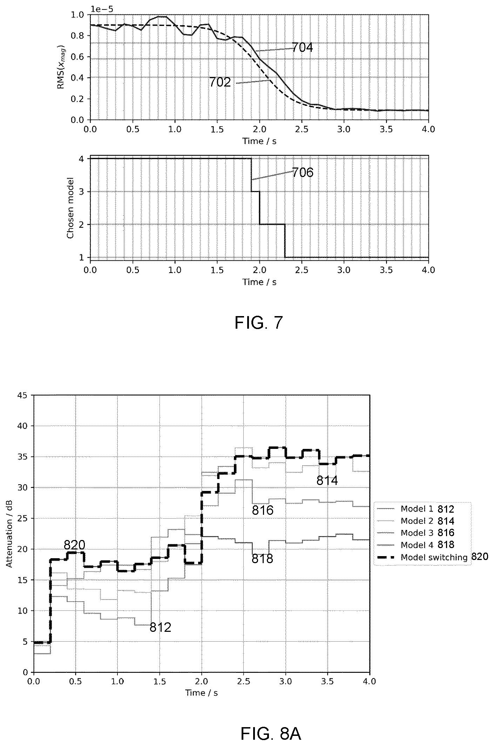

An example of this estimation of $x_{mag}$ and model selection over time is illustrated in Figure 7. In the upper plot, the dashed line 702 represents the true change in $x_{mag}$ over time, and the curve 704 represents the estimates of $x_{mag}$ using the RMS estimator. Line 706 in the lower plot shows which of the four NN controllers is selected every 0.1 s.

It will be understood that the RMS estimation may be replaced by any similar estimation method/system metric. For example, in the above case, using an exponential moving average (EMA) estimator could result in lower variance in the estimate for a constant $x_{mag}$, but also a greater estimation lag. Other more intelligent estimators could also be considered, for example, using Kalman filtering. In general, the metric can be one that can be estimated in real time, and the performance of the set of small NN controllers does not generalize particularly well when the behaviour of the underlying nonlinear system changes as the measurable metric changes.

Figure 8A plots the performance of the four trained NNs over time as $x_{mag}$ changes with the profile plotted in Figure 7. It shows the performance of the NN switching approach over time, compared to that of the four NNs fixed. Model 4 (line 818) initially has the best performance, but suffers at later times when $x_{mag}$ falls. Conversely, Model 1 (line 812) has poor performance initially, but has greater performance later in the simulation as $x_{mag}$ falls. As a result of using an embodiment of the NN controller switching procedure disclosed herein, good control performance can be achieved (as indicated by the black dashed line 820) as $x_{mag}$ changes. The performance of the NN switching approach does not outperform *all* of the fixed NN controllers at all time as there is some uncertainty in the RMS estimator, and also some delay associated with the estimator. This results in the slightly sub-optimal performance seen in $t$ = 1.5 s to $t$ = 2.5 s.

The above example focused on there being a single parameter/system metric which drives the form of the nonlinear behaviour in the system. However, in practice, there can be multiple metrics which drive the change in behaviour. For example, as well as magnitude of the reference signal $x_{mag}$, temperature $T$ can also change the nonlinear behaviour of the system. In such cases, embodiments can be generalised to multiple dimensions (multiple system metrics). For instance, in the case of two different metrics, there are 'regions' in the space of the two metrics which would determine which NN would be utilised at a given time. Again, in use, the selection will be based on which individual NN has been shown to have best performance for that specific set of metrics.

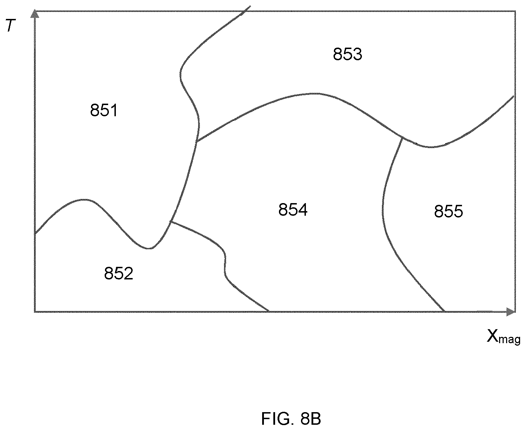

Figure 8B illustrates an example based on the above two system metrics. In the graph the x-axis represents $x_{mag}$ and the y-axis represents the temperature $T$. Curves have been plotted in the graph that define five regions 851 - 855 based on which individual NN were found to have the best performance for specific combinations of $x_{mag}$ and $T$, e.g. using the testing techniques described herein. The values of the two measured system metrics can be plotted on the graph such that their x, y coordinates fall within one of the regions 851 - 855. This can determine which of four NNs, NN1 - NN4, should be selected as shown in the example table below:

| Selected NN identifier | Measured metrics within region |
|---|---|
| NN1 | 851 |
| NN2 | 852 |
| NN3 | 853 |
| NN4 | 854 |
| NN1 | 855 |

It will be understood that the number and type of the system metrics, as well as the number of NNs, are exemplary and can vary. Further, the graph of Figure 8B is shown for understanding only and in embodiments a computing device will use data corresponding to the information it conveys to select an appropriate NN based on measured system metrics without actually plotting a graph.

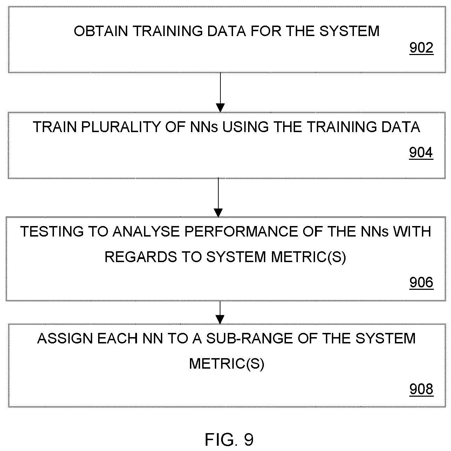

Figure 9 shows steps involved in generating data relating to a set of NN models for use in a system controller according to an embodiment of the invention.

At step 902 training data based on the system that is to be controlled is obtained. The training data will typically be obtained by using the system for one or more periods of time and recording the resulting system inputs and outputs. Examples of suitable systems are given herein but it will be understood that these are non-limiting and alternative embodiments may provide controllers for many different types of systems. In general, the training data will be generated by measuring the reference signal received by the system in normal operation, as well as the resultant signal measured at an error sensor. These can represent the inputs and outputs to the dual-NN system of Figure 3 that are to be mapped, for example.

The skilled person will be able to determine factors such as the duration and range of the operation that are to be used to generate the training data. The operation during training may be under human and/or automated control. For example, the training data may be generated by using a random reference signal where the RMS value (*xmag*) of the reference signal gradually changes over time. Other methods of varying *xmag* (or alternative metric(s) for other nonlinear systems) may be used. The measurable metric(s) of the system (e.g. $x_{mag}$) which dynamically determines the effect of the nonlinearity on the primary path of the system during operation will also be determined.

At step 904 the obtained training data is used to train a plurality of NNs/models. The number of NNs used will, in practice, be a trade-off between various different factors. The number may be determined by the practical computational limits of the control system. For instance, if a more powerful processor is available for the implementation of the controller, then larger (i.e. more hidden nodes/longer Tapped Delay Line of inputs) NNs may be used. As larger NNs have a better ability to generalize, this will result in fewer individual NNs being required. Less powerful processors similarly would result in more, smaller NNs being used. There may also be practical upper limits to the number of NNs implemented. If a larger number of NNs is used then this could result in rapid switching between different models. This could increase the computational burden on the controller, and also result in sub-optimal control performance. Limiting the number of NNs implemented may therefore be practically important.

More generally, the number of NNs used will be determined by the complexity of the nonlinear system under control, or the range of nonlinear behaviour over which good control is required. In many cases, the number of NNs may vary between 2 and 10. The NNs can be trained to have good performance within a certain region of the space of the measurable system metric(s).

At step 906 each trained NN is used to control the system and its resulting performance is analysed. An NN may control the system by means of a model/data representing its weights and biases, etc, being loaded into a suitable NN application that receives system input signal(s) that is/are processed by the NN to output a system control signal. Each trained NN is tested individually across a sub-range of values of the chosen metric(s) to establish its individual control performance in this space. The at least one metric (e.g. $x_{mag}$) and its relationship to the system inputs/outputs resulting from use of each trained NN can be recorded/analysed. For example, when determining the control performance of the individual trained NNs at a single level, each NN may be tested over a certain duration, e.g. 10s, with $xmag$ set at a constant level within its overall range. This may be considered sufficient for a reference signal with frequency content up to 300 Hz. This process can be repeated multiple times over different values of $xmag$ to generate curves (e.g. 612 - 618 in Figure 6) that represents the maximum performance of each individual NNs. If multiple system metrics are to be used then the process can be repeated multiple times over different values of the further system metric(s), which can result in curves that define multiple regions as shown in the example graph of Figure 8B. The values and repetitions required can be varied as appropriate for each different system metric.

In the case of the single system metric example, the range of these values of $xmag$ may be determined by the range over which a single large NN, which had been previously trained and tested at a single level of $xmag,$ had variation in performance (i.e. performance falls as $xmag$ increases). In practice, this range may be limited by the typical operating limits of the system in question. It is possible to determine which NN performs best for which sub-range by testing the individual NNs at a range of fixed values of the metric as described above. The sub-ranges (e.g. 602 - 608 in Figure 6) can then be determined by the values of the metric, e.g. $xmag,$ at which the performance curves of the individual NNs cross over. It can therefore be determined, which of the plurality of NNs results in the best/highest/maximal performance over which sub-range of the overall range of the system metric. Thus, step 904 results in information regarding which NN performs best over the sub-ranges of the overall range of the metric.

At step 908 each NN is assigned a sub-range of the system metric(s) based on the information produced by step 906. For example, for each region/sub-range within the space of the metric(s) where a single trained NN has the greatest control performance compared to all the other trained NNs, that particular NN can be assigned to that particular region/sub-range. A data structure such as a table may be created and stored for when the trained NNs are subsequently used to control the system in practice (i.e. not during training). An example table is given below based on Figure 6:

| NN identifier | Metric sub-range (e.g. $x_{mag}$) |
|---|---|
| 612 | 0 - 0.41 |
| 614 | 0.42 - 0.57 |
| 616 | 0.58 - 0.76 |
| 618 | 0.77 - 1.0 |

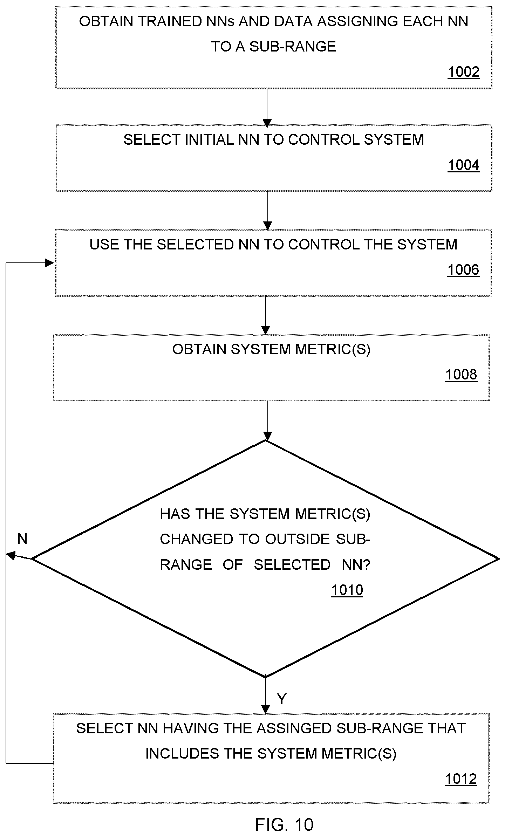

Figure 10 shows steps that can be performed when using the trained NNs and other data generated by the process of Figure 9 to control a system according to an embodiment. The steps may be performed by a computing device that is integrated in, or in communication with, with the system.

At step 1002, data representing the set of trained NNs is obtained. This may comprise, for example, the NN architecture, weights and biases of the NNs trained at step 904 above. Data representing an assignment of each NN to a sub-range of the measurement values can also be obtained. This can comprise, for example, the data/table created at step 908 above. The data obtained at step 1002 may be obtained from a data store, e.g. RAM, solid state memory or the like, that is local to the computing device executing the steps, and/or may be obtained from a remote source, such as another computing device over a wired or wireless communications network.

At step 1004, the trained NN that will initially be used to control the system is selected. This may be done by obtaining an initial measurement of the system metric(s) and selecting the correspondingly assigned NN, or it may be done in some other way, e.g. at random or based on an expected initial value of the metric(s).

At step 1006, the selected NN is used as a controller for the system during its operation. The controller can comprise a computing device including a processor and memory that can execute the NN and communicate with the system to be controlled. The NN will receive at least one system input signal and output a system control signal. The system control signal can be used to control one or more components the system in any appropriate manner, e.g. control attenuation of a speaker. The controller NN can, for example, be used in the place of the controller NN 202 or NN 302 in Figures 2 or 3. During inference/operation illustrated components such as the plant model 206/306 and the summation component 210/310 are not present/unused and the control signal generated by the controller NN will be directly used for system control.

At step 1008, the system metric(s) is/are obtained during the operation of the system, typically in real-time. This may be done, for example, at predetermined intervals or may be triggered by an event, such as the system input changing significantly. In some cases, the metric(s) may comprise a measurement based on a signal produced by a sensor and may directly correspond to that measurement. Alternatively, the obtained metric(s) may comprise an estimate, e.g. RMS, that is based on a calculation involving a measured value provided by a sensor or the like.

At step 1010, a determination is made as to whether or not the obtained metric(s) is/are within the sub-range/region assigned to the currently-selected NN. If so then the same NN will still be used to control the system (as it provides the best/maximal system performance) and control passes back to step 1006. If not then control passes to step 1012. For example, if the sub-range assigned to the currently-selected NN is 0.42 - 0.57 and the value of the obtained metric is 0.5 then there will be no NN switching. On the other hand, if the value of the obtained metric is, for example, 0.6 then the NN will be switched to the NN that has been assigned to a range (e.g. 0.58 - 0.76) which includes that value.

At step 1012, the appropriate NN that has been assigned to the sub-range/region that includes the value(s) of the obtained metric(s) is newly selected for controlling the system. Control then passes back to step 1006 so that the different/newly-selected NN is used to control system. This "switching" may be done, for example, by reloading the model of the new NN model/set of weights and biases to the executable NN that is used as the controller. It should therefore be understood that only one trained NN that performs inference is necessary for use as a system controller, but weights/-biases from a plurality of trained NNs are available for selection/switching.

An alternative acoustic/vibroacoustic example application comprises control of road noise in a vehicle cabin. It is well known that the vibroacoustic pathway from the interaction of vehicle tyres with the ground to the acoustic noise in vehicle cabins can be strongly nonlinear as a result of the nonlinear behaviours of modern suspension systems. The control system can therefore be applied to improving acoustic control in a cabin for cancelling tyre noise. The controller input can comprise an accelerometer close to the wheel. The primary path is the vibroacoustic pathway from the accelerometer to the (likely approximate) location of the passenger ears. The disturbance is the noise caused at the passenger ears caused by the interaction between the wheel(s) and ground surface. The control signal comprises a voltage applied to a loudspeaker within the vehicle cabin aiming to produce acoustic cancellation at the passenger ears. The plant model models the mapping between the voltage applied to the loudspeaker and the pressure measured at (or close to) the passenger ear(s).

Another acoustic/vibroacoustic example application comprises control of vibration in a large structure, such as a cargo ship. Large engines can cause strong vibrations that propagate throughout the structure, causing unwanted vibration (perhaps at the location of some delicate cargo). Due to the large amplitude of the structural displacement caused by the engine(s), the structure exhibits nonlinear behaviour local to the engines. As a result of structural damping, the structure behaves approximately linearly further from the engines. In this case, control actuators further from the engines will potentially be decoupled from the nonlinear behaviour of the structure local to the engines, and so examples can be used to control the vibration. In this case, the input comprises an accelerometer measurement on an engine. The primary path is the vibration pathway(s) from the engine to the location where vibration control is desired. The disturbance is the vibration (displacement of the structure) that is to be controlled at the control location. The control signal can comprise a voltage applied to the control actuator. The plant model models the mapping from the voltage signal applied to the control actuator and the resultant displacement of the structure at the control location.

The fixed NN controllers have been found to have the ability to generalise well across a range of magnitudes of inputs to the nonlinear system. Relative to the performance of the FxLMS algorithm, the control performance of the NN controllers is generally best close to the upper limit of the range of magnitudes of inputs over which the controllers are trained. This may be a result of the chosen cost function during the training of the NNs. Increasing the training range generally improves performance at higher input magnitudes, but may compromise performance at lower input magnitudes. Increasing the number of hidden nodes in the NN controllers can improve performance within the trained range and generalised performance can be improved above the trained range. The residual error of a NN controller under sudden changes to the system input indicates that the controller shows robust behaviour over this transition.

In alternative cases reconsidering the form of the cost function used to train the NN controllers can help to improve performance at lower input magnitudes. This may also be achieved by including fixed, pretrained linear elements within the NN during training to provide some degree of 'transfer learning' from the linear case. Alternative versions may also be based on other NN architectures, which may provide relative benefits for the control of different types of nonlinearities. MLPs are capable of nonlinear mappings, and therefore are an appropriate architecture to model and control nonlinear systems. However, MLPs may not be able to fully capture the dynamics of systems which include hysteretic or other time-dependent nonlinearities. Networks which incorporate recurrence (e.g. RNNs, LSTMs, etc) may offer advantages for these. An analogy can be drawn between FIR and IIR filters, and MLPs and RNNs. IIR filters are known to offer, in some cases, increased computational efficiency over FIR filters due to their internal feedback. A similar advantage may arise for recurrent networks over MLPs for nonlinear modelling and control. Convolutional networks have also shown good performance, which may be a result of their inherently efficient architecture when applied to image and signal processing. Thus, such NNs can also be suitable for alternative applications.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A computer-implemented method of controlling a system using an artificial neural network, the method comprising:

   obtaining (1002) data defining a plurality of trained artificial neural networks models, each of the plurality of models trained to output a system control signal based on at least one input signal;
   obtaining (1008) at least one system metric relating to operation of the system;
   selecting (1010) one of the plurality of models using the at least one system metric, and
   using (1006) the selected model as a controller for the system.

2. A method according to claim 1, wherein the selected model is used as a controller for the system by outputting the system control signal based on at least one input signal.

3. A method according to claim 1, wherein the, or each said, system metric has a value within an expected range of values, and each of the plurality of models is assigned to one of a plurality of sub-ranges of the range of values.

4. A method according to claim 3, wherein the step of selecting (1010) one of the plurality of models comprises selecting one of the plurality of models assigned to the one of the plurality of sub-ranges that includes a current value(s) of the obtained at least one system metric.

5. A method according to any preceding claim, further comprising obtaining (1002) data including an assignment of each possible value(s) of the at least one metric to one of the plurality of models.

6. A method according to any preceding claim, wherein inputs and outputs of the system are non-linear.

7. A method according to claim 6, wherein the at least one system metric indicates effects of nonlinearity on a primary path of the system during the operation of the system.

8. A method according to any preceding claim, wherein the at least one system metric comprises a measurement based on a signal produced by a sensor.

9. A method according to claim 8, wherein the at least one system metric comprises an estimate that is based on a calculation involving a value of the signal produced by the sensor.

10. A method according to claim 9, wherein the system metric comprises a root mean square of a reference input signal of the system.

11. A computer readable medium, or circuit, storing a computer program to operate a method according to any preceding claim.

12. A system controller (202) comprising a processor and memory, wherein the processor is configured to execute a method according to any of claims 1 to 10.

13. A system including a system controller (202) according to claim 12.

14. A method of generating data adapted for using an artificial neural network in control of a system, the method comprising:

obtaining data defining a plurality of trained artificial neural networks models, each of the plurality of models trained to output a system control signal based on at least one input signal;
using each of the plurality of models to control the system;
determining (906) which of the plurality of trained models results in a best control performance of the system for each of a plurality of sub-ranges of an overall range of at least one system metric;
assigning (908) each of the plurality of trained models to a respective one of the plurality of sub-ranges based on the determining, and
generating (908) data representing the assigning.

15. A method according to claim 14, further comprising:

recording an output of the model for individual values of the at least one system metric;
testing if control performance of one of the plurality of trained models is better than control performance of others of the plurality of trained models for a subset of the individual values, and
setting the subset as the sub-range to be assigned to the one of the plurality of trained models if the control performance of the one trained model is better than control performance of others of the plurality of trained models.

FIG. 1

FIG. 2

$x[n]$

$z^{-1}$

Controller
302

$z^{-1}$

302A

Controller duplicate
trained in tandem

Primary Path
304

$d[n]$

$u[n]$

$u[n-1]$

Plant Model
306

$\Sigma$  310

$e[n]$

$y[n]$

300

FIG. 3

OBTAIN INPUT DATA

402

INPUT DATA TO PLURALITY OF CONTROL NNs TO OUTPUT
PLURALITY OF CONTROL SIGNALS

404

PLURALITY OF CONTROL SIGNALS TO MODEL NN

406

GENERATE SYSTEM ERROR SIGNAL USING MODEL OUTPUT
SIGNAL

408

GENERATE NEXT ITERATION OF THE PLURALITY OF NNs
USING THE MODEL OUTPUT SIGNAL AND THE INPUT DATA

410

FIG. 4

FIG. 5

FIG. 6

FIG. 7

FIG. 8A

FIG. 8B

OBTAIN TRAINING DATA FOR THE SYSTEM

902

TRAIN PLURALITY OF NNs USING THE TRAINING DATA

904

TESTING TO ANALYSE PERFORMANCE OF THE NNs WITH REGARDS TO SYSTEM METRIC(S)

906

ASSIGN EACH NN TO A SUB-RANGE OF THE SYSTEM METRIC(S)

908

FIG. 9

OBTAIN TRAINED NNs AND DATA ASSIGNING EACH NN TO A SUB-RANGE

1002

SELECT INITIAL NN TO CONTROL SYSTEM

1004

USE THE SELECTED NN TO CONTROL THE SYSTEM

1006

OBTAIN SYSTEM METRIC(S)

1008

HAS THE SYSTEM METRIC(S) CHANGED TO OUTSIDE SUB-RANGE OF SELECTED NN?

1010

N

Y

SELECT NN HAVING THE ASSINGED SUB-RANGE THAT INCLUDES THE SYSTEM METRIC(S)

1012

FIG. 10

**EUROPEAN SEARCH REPORT**

Application Number

EP 23 27 5102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/157282 A1 (ABELOE KENNETH AUSTIN [US]) 27 May 2021 (2021-05-27) * paragraphs [0003], [0007] – [0012], [0043] – [0046], [0064] – [0088], [0101] – [0111], [0121] – [0125] * | 1-15 | INV. G05B13/02 G06N3/045 |
| X | US 2019/179023 A1 (ENGLARD BENJAMIN [US] ET AL) 13 June 2019 (2019-06-13) | 1,2,5-15 | |
| A | * paragraphs [0042], [0144] – [0152]; figure 12 * | 3,4 | |
| A | WO 2022/198538 A1 (HUAWEI TECH CO LTD [CN]) 29 September 2022 (2022-09-29) * page 9, line 19 – page 11, line 25 * | 1-15 | |
| A | US 2003/149493 A1 (BLEVINS TERRENCE L [US] ET AL) 7 August 2003 (2003-08-07) * paragraphs [0009], [0010] * | 1-15 | |

TECHNICAL FIELDS SEARCHED (IPC)

G05B
G06N
G10K

The present search report has been drawn up for all claims

| Place of search | Date of completion of the search | Examiner |
|---|---|---|
| Munich | 15 December 2023 | Frey, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 27 5102

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2023

| Patent document cited in search report | | Publication date | Patent family member(s) | | Publication date |
|---|---|---|---|---|---|
| US 2021157282 | A1 | 27-05-2021 | NONE | | |
| US 2019179023 | A1 | 13-06-2019 | US | 2019176841 A1 | 13-06-2019 |
| | | | US | 2019178988 A1 | 13-06-2019 |
| | | | US | 2019179023 A1 | 13-06-2019 |
| | | | US | 2019179024 A1 | 13-06-2019 |
| | | | US | 2019179025 A1 | 13-06-2019 |
| | | | US | 2019179026 A1 | 13-06-2019 |
| | | | US | 2019179027 A1 | 13-06-2019 |
| | | | US | 2019179317 A1 | 13-06-2019 |
| | | | US | 2019180502 A1 | 13-06-2019 |
| | | | WO | 2019118542 A2 | 20-06-2019 |
| WO 2022198538 | A1 | 29-09-2022 | CN | 116982106 A | 31-10-2023 |
| | | | WO | 2022198538 A1 | 29-09-2022 |
| US 2003149493 | A1 | 07-08-2003 | CN | 1438554 A | 27-08-2003 |
| | | | DE | 10304902 A1 | 23-10-2003 |
| | | | GB | 2386437 A | 17-09-2003 |
| | | | HK | 1055475 A1 | 09-01-2004 |
| | | | HK | 1057785 A1 | 16-04-2004 |
| | | | JP | 4194396 B2 | 10-12-2008 |
| | | | JP | 2003295907 A | 17-10-2003 |
| | | | US | 2003149493 A1 | 07-08-2003 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2302901 A

**Non-patent literature cited in the description**

- **Z.-C. QIU** ; **W.-Z. ZHANG**. *Trajectory planning and diagonal recurrent neural network vibration control of a flexible manipulator using structural light sensor*, vol. 132, 563-594